# NEUE EUROPÄISCHE PATENTSCHRIFT

(11) **EP 2 441 850 B2**
(45) Veröffentlichungstag und Bekanntmachung des Hinweises auf die Entscheidung über den Einspruch: **22.06.2022**
(45) Hinweis auf die Patenterteilung: 05.04.2017
(21) Anmeldenummer: 11155681.7
(22) Anmeldetag: 23.02.2011
(51) Int. Cl.: B62D 25/04, C21D 1/20, C21D 8/00, C22C 1/02, B62D 25/08, C21D 1/673, C21D 8/02, C21D 8/04, C22C 38/02, C22C 38/04, C22C 38/06, C22C 38/14, C22C 38/32

(54) **Kraftfahrzeugsäule sowie Verfahren zur Herstellung einer warmumgeformten und pressgehärteten Kraftfahrzeugsäule**
Motor vehicle column and method for producing a thermoformed and press-hardened motor vehicle column
Colonne de véhicule automobile et procédé de fabrication d'une colonne de véhicule automobile déformée à chaud et durcie à la presse

(30) Priorität: 15.10.2010 DE 102010048209
(43) Veröffentlichungstag der Anmeldung: 18.04.2012
(73) Patentinhaber: Benteler Automobiltechnik GmbH, 33102 Paderborn (DE)
(72) Erfinder: Zimmermann, Andreas, 33659 Bielefeld (DE); Dingemans, Jan, 33102 Paderborn (DE); Pellmann, Markus, 48336 Sassenberg (DE); Böke, Johannes, Dr., 32825 Blomberg (DE)
(74) Vertreter: Ksoll, Peter

(56) Entgegenhaltungen:
- EP-A2- 0 816 520
- WO-A1-2009/064236
- WO-A1-2010/076247
- DE-A1- 2 543 750
- DE-B3-102007 057 855
- DE-C1- 10 208 216
- DE-T5-112008 001 803
- DE-U1- 20 014 361
- US-A1- 2008 196 800
- TRÖSTER T ET AL: "Innovative Warmumformung", NEUERE ENTWICKLUNGEN IN DER BLECHUMFORMUNG: VORTRAGSTEXTE ZUR VERANSTALTUNG INTERNATIONALE KONFERENZ NEUERE ENTWICKLUNGEN IN DER BLECHUMFORMUNG IN FELLBACH (BEI STUTTGART) AM 11. UND 12. MAI 2004,, 12. Mai 2004 (2004-05-12), Seiten 51-66, XP009130353, ISBN: 978-3-88355-331-3
- Thomas Ausmann: "Hot Stamp Technologies", , 15. September 2010 (2010-09-15), XP002668592, Gefunden im Internet: URL:http://us.aptgroup.com/19946/40358/Ben telerAutomotive.pdf [gefunden am 2012-02-02]
- HEIN PHILIPP ET AL: "Status and innovation trends in hot stamping of USIBOR 1500 P", STEEL RESEARCH INTERNATIONAL, VERLAG STAHLEISEN GMBH., DUSSELDORF, DE, Bd. 79, Nr. 2, 1. Februar 2008 (2008-02-01), Seiten 85-91, XP009101799, ISSN: 1611-3683
- HEIN PHILIPP et al.: "Status and innovation trends in hot stamping of USIBOR 1500 P", STEEL RESEARCH INTERNATIONAL, vol. 79, no. 2, 1 February 2008 (2008-02-01), pages 85-91, DUSSELDORF, DE ISSN: 1611-3683

## Beschreibung

Die vorliegende Erfindung betrifft eine Kraftfahrzeugsäule, hergestellt durch Warmumformen und Presshärten, gemäß den Merkmalen von Patentanspruch 1.

Die vorliegende Erfindung betrifft weiterhin ein Verfahren zur Herstellung einer Kraftfahrzeugsäule gemäß den Merkmalen im Patentanspruch 14.

Im Kraftfahrzeugbau steigt aufgrund gesetzlicher und herstellerspezifischer Vorgaben das Anforderungsprofil an die Fahrzeugsicherheit. Gleichzeitig sind die Kraftfahrzeughersteller bestrebt, die Kraftfahrzeugkarosserien im Zuge einer Minimierung des Kraftstoffverbrauchs sowie des CO2-Ausstoße im Eigengewicht zu senken. Dies stellt eine Diskrepanz zwischen niedrigem Eigengewicht sowie hoher Biegungs- und Torsionssteifigkeit und hoher Crashsicherheit dar.

Ein Weg ist beispielsweise der Einsatz von Leichtmetallwerkstoffen, insbesondere von Aluminiumlegierungen, oder aber Karosserien in Hybridbauweise, beispielsweise aus metallischen Legierungen sowie Faserverbundwerkstoffen oder aber Kunststoffen. Beide zuvor genannten Varianten bedingen jedoch jeweils hohe Materialkosten, was wiederum Produktionskosten gerade von Volumenmodellen im Kraftfahrzeugbau hochtreibt.

Nach wie vor ist jedoch eine metallische Legierung, insbesondere Stahlwerkstoff, der bevorzugte Werkstoff für den Karosseriebau, insbesondere den Rohkarosseriebau. Durch konsequente Weiterentwicklung gilt der Stahlwerkstoff heutzutage weiterhin als Hightech Material, welcher durch verschiedenste Verfahrensmöglichkeiten einen guten Kompromiss zwischen günstiger Produzierbarkeit, guter Crashsicherheit und Langlebigkeit bildet.

Aus der DE 10 2005 054 847 B3 sind beispielsweise warmumgeformte und pressgehärtete Bauteile bekannt, die nach der Entnahme aus der Form und dem Einstellen hochfester mechanischer Eigenschaften im Stahl einer gezielten Wärmebehandlung unterzogen werden. Insbesondere bei Struktur und/oder Sicherheitsbauteilen, die im Crashfall axial belastet werden, soll ein nach der vorgenannten Art hergestelltes Bauteil einerseits hochfest sein und andererseits im Crashfalls Falten werfen, um Stoßenergie hier gezielt abbauen zu können.

Aus der Veröffentlichung "neuere Entwicklungen in der Blechumformung" der MAT Info Werkstoff-Informationsgesellschaft zeigt mehrere Verfahren zur Herstellung von Karosseriebauteilen, welche unter Ausprägung verschiedener Bereiche unterschiedlicher Duktilität dazu beitragen sollten, die Crashsicherheit in Fahrzeugen, speziell in PKWs zu erhöhen. Es wird beispielsweise eine B-Säule eines Kraftfahrzeuges angeführt, welche aus zwei Bereichen besteht, wobei der erste Bereich eine duktile und der zweite Bereich eine ultrahochfeste Ausprägung besitzt. Zusätzlich entsteht ein Übergangsbereich, welcher einen gleichmäßigen Übergang von geringen zu hohen Härtewerten ermöglicht.

Aus der DE 102 08 216 C1 ist weiterhin ein Verfahren zur Herstellung eines gehärteten metallischen Bauteils bekannt. Dieses Bauteil wird zunächst in einer Erwärmungseinrichtung auf eine Austenitisierungstemperatur erwärmt und anschließend kontrolliert abgekühlt zu werden und so in einem Endabschnitt des Bauteils eine höhere Duktilität geschaffen wird.

Auch die WO 2010/07 6247 A1 zeigt ein Verfahren zur Herstellung partiell gehärteter Bauteile aus Stahlblech. Durch dieses Verfahren ist es möglich die Härte bzw. Duktilität von insbesondere pressgehärten Bauteilen in lokal definierten Teilbereichen derart zu beeinflussen, dass es zu keiner weiteren Beeinflussung anderer Bereiche des Teilquerschnitts kommt. Dies wird dadurch ermöglicht, dass Induktoren eingesetzt werden, die die Temperatur des Bauteils während des Abkühlprozesses präzise einstellen können.

Eine Wärmbehandlung findet gemäß dem Stand der Technik üblicherweise in einem Temperaturbereich zwischen 320° C und 400° C statt und verändert die im Warmform- und Presshärteprozess eingestellten Werkstoffeigenschaften mit ihren Festigkeitswerten kaum. Gleichzeitig wird jedoch die Duktilität des Werkstoffs derart erhöht, dass im Crashfall eine gute Faltenbildung möglich ist.

Die zusätzliche Wärmenachbehandlung bedingt jedoch wiederum einen höheren Produktionskostenaufwand, da zum Serienstart hin die Werkzeugkosten erheblich höher sind.

Aufgabe der vorliegenden Erfindung ist es daher, ein Kraftfahrzeugbauteil sowie ein Verfahren zu dessen Herstellung zur Verfügung zu stellen, dass gegenüber dem Stand der Technik eine geringere Herstellungskosten aufweist, bei gleichzeitiger zielgenauer Einstellung von Werkstoffeigenschaften innerhalb des Bauteils.

Die zuvor genannte Aufgabe wird erfindungsgemäß mit den Merkmalen von Patentanspruch 1 gelöst.

Der verfahrenstechnische Anteil der Aufgabe wird mit einem Verfahren zur Herstellung einer Kraftfahrzeugsäule gemäß den Merkmalen im Patentanspruch 14 gelöst.

Vorteilhafte Ausführungsvarianten sind Bestandteil der abhängigen Patentansprüche.

Die erfindungsgemäße Kraftfahrzeugsäule, hergestellt durch Warmumformen und Presshärten, wobei die Kraftfahrzeugsäule durch den eigentlichen Herstellungsvorgang, also nach dem Presshärten mindestens zwei Bereiche unterschiedlicher Festigkeit aufweist, wobei ein Bereich erster Art Bainit als Hauptgefügebestandteil aufweist und dass dieser ein Dehnvermögen A50 zwischen 10 % und 30 % hat und ein Bereich zweiter Art Martensit als Hauptgefügebestandteil aufweist und ein Übergangsbereich zwischen dem Bereich erster Art und dem Bereich zweiter Art kleiner als 50 mm ist, dadurch gekennzeichnet, dass der Bereich erster Art als Anbindungsbereich für als Flansch, Fügeflansch und/oder Außenkante der Kraftfahrzeugbauteile ausgebildet ist und der Bereich zweiter Art Bainit als weiteren Gefügebestandteil aufweist, wobei in dem Übergangsbereich die Zugfestigkeit mit einem Gradienten von mehr als 200 N/mm² pro 10 mm abnimmt oder zunimmt.

Der Übergangsbereich ist kleiner als 50 mm, besonders bevorzugt kleiner als 30 mm und insbesondere kleiner als 20 mm ausgebildet. Durch den sehr kleinen Übergangsbereich ist es im Rahmen der Erfindung möglich, das Bauteil innerhalb eines Herstellungsschrittes, nämlich dem Herstellungsverfahren an sich, derart gezielt einzustellen, dass die geforderten Crasheigenschaften, bei gleichzeitiger günstiger Produzierbarkeit unter der Berücksichtigung der auftretenden Produktionstoleranzen sicher hergestellt ist.

Eine Kraftfahrzeugsäule kann beispielsweise als A-Säule, B-Säule, C-Säule oder D-Säule ausgebildet sein. Hierbei ist unter Umständen im Bereich der Anbindungspunkte an einem Dachholm oder aber an einem Schweller eine weichere Struktur mit hoher Bruchdehnung bzw. Duktilität notwendig, sodass im Crashfall ein Reißen vermieden wird und gleichzeitig ein gezielter Faltenwurf eingestellt werden kann.

Im Rahmen der Erfindung können jedoch auch im Bereich von Türscharnieren oder anderen Anbindungspunkten ebenfalls gezielt Bereiche mit einer höheren Duktilität gefordert sein, sodass hier im Crashfall ein Ausreißen vermieden wird. Beispielsweise auch bei der Koppelung von weiteren Bauteilen oder aber Verstärkungspatches mit Nietverfahren ist es durch die erfindungsgemäße Kraftfahrzeugsäule möglich, besonders produktionsgenau Bereiche mit hoher Duktilität einzustellen, sodass ein Ausreißen von Nieten oder sonstigen Anbindungspunkten in diesen Bereichen im Crashfall möglichst vermieden wird.

Ebenfalls eine Schwächung des Materials aufgrund von hoher Dauerlastschwingungen und/oder Vibrationen in Verbindung mit hoher Härte wird somit vermieden. Die restlichen Bestandteile der Kraftfahrzeugsäule, also die

Bereiche zweiter Art, weisen ein im Wesentlichen martensitisches Gefüge mit besonders hohen Festigkeitswerten auf, sodass die mindestgeforderte Festigkeit des Bauteils hinreichend erfüllt ist.

Die erfindungsgemäß hergestellte Kraftfahrzeugsäule lässt sich somit kostengünstig gegenüber mit aus dem Stand der Technik bekannten Herstellungsverfahren hergestellten Bauteilen produzieren, da lediglich ein Umform- und Presshärteprozess notwendig ist, um die wichtigsten geforderten Bauteileigenschaften einzustellen. Die Einstellung über ein im Wesentlichen martensitisches Gefüge und ein Zwischengefüge, welches im Wesentlichen durch ein bainitisches Gefüge geprägt ist, erlaubt dabei eine besonders fehlerunanfällige gezielte Einstellung der geforderten Werkstoffeigenschaften in klar definierten Bereichen des Bauteils.

Der Bereich zweiter Art, welcher ein martensititsches Gefüge als Hauptgefügebestandteil aufweist, ist erfindungsgemäß dadurch gekennzeichnet, dass das martensitische Gefüge zu mehr als 50 %, insbesondere mehr als 80 %, bevorzugt mehr als 90 % und besonders bevorzugt mehr als 95 % ausgebildet ist. Es sind weitere Gefügebestandteile mit weniger als 15 % vorhanden.

Die hohe Verwindungssteifigkeit sowie Biegesteifigkeit durch das martensitische Gefüge garantiert die hohe Härte der erfindungsgemäßen Kraftfahrzeugsäule, was beispielsweise im Falle eines Überschlages oder ähnlichen Crasheinwirkungen die Fahrgastzelle bestmöglich aufrecht erhält und somit die Fahrzeuginsassen bestmöglich schützt.

Im Rahmen der Erfindung kann jedoch auch im Bereich zweiter Art als weiterer Gefügebestandteil Bainit vorhanden sein.

Im Rahmen der Erfindung weist der Bereich erster Art als Hauptgefügebestandteil Bainit auf, wobei weitere Gefügebestandteile mit weniger als 30 % oder insbesondere weniger als 15 % vorhanden sind. Hier kann beispielsweise ein Mischgefüge aus Bainit, mit Ferrit und/oder Perlit vorhanden sein. Gegebenenfalls kann im Rahmen der Erfindung auch Martensit als Gefügebestandteil im Bereich erster Art vorhanden sein.

Im Anwendungsfall beispielsweise einer Kraftfahrzeug B-Säule ist der Anbindungsbereich im Fuß- oder Deckenbereich, also zum Kraftfahrzeugschweller oder Dachholm gegenüber dem Bereich zweiter Art mit einer im Wesentlichen parallel verlaufenden Übergangsgrenze benachbart angeordnet.

Alternativ ist der Bereich erster Art dabei von dem Bereich zweiter Art zumindest teilweise umschlossen, besonders bevorzugt ist der Bereich erster Art von dem Bereich zweiter Art vollständig umschlossen. Im Bereich von Anbindungspunkten für beispielsweise Kraftfahrzeugtüren, ist der Bereich erster Art vorzugsweise von dem Bereich zweiter Art vollständig umschlossen. Durch den erfindungsgemäßen besonders kleinen Übergangsbereich bleibt weiterhin die Steifigkeit in Bauteilrichtung erhalten, sodass im Wesentlichen keine Schwachstelle, beispielsweise in Form einer ungewollten Sollknickstelle hergestellt ist. Ebenfalls ist der Bereich erster Art jedoch derart duktil ausgebildet, dass eine Rissbildung weitestgehend vermieden wird. Das Ausreißen von Türscharnieren oder aber Türschlössern durch beispielsweise einen Seitencrash wird weitestgehend durch die Duktilität des Bereichs erster Art vermieden.

Hierzu ist besonders bevorzugt der Bereich erster Art punktuell ausgebildet, vorzugsweise mit einem Durchmesser von weniger als 40 mm, insbesondere weniger als 20 mm und besonders bevorzugt weniger als 10 mm.

Ebenfalls ist im Rahmen der Erfindung im Bereich erster Art ein Durchzug herstellbar. Dies bedeutet, dass die Herstellung des Durchzuges während des Umformprozesses und/oder Presshärtprozesses gleichzeitig erfolgen kann, bzw. besonders bevorzugt der Durchzug auch nach Beendigung des Presshärtvorganges herstellbar ist. Aufgrund der höheren Duktilität ergibt sich hierbei für ein Loch- oder Stanzwerkzeug ein geringerer Werkzeugverschleiß bzw. der Durchzug ist überhaupt erst ohne Rissbildung möglich.

Vorteilhaft ist im Rahmen der Erfindung vorgesehen, Randbereiche, insbesondere Aussparungen und Flansche als Bereiche erster Art auszubilden, wodurch Einrisse von der Kante ausgehend wirksam vermieden werden können. Auch Bereiche mit nach dem Presshärten erfolgender mechanischer Bearbeitung wie Umstellungen können sinnvoller Weise als Bereiche erster Art ausgeführt werden.

Im Rahmen der Erfindung kann der Bereich erster Art weiterhin als Bereich zur Herstellung von Schnittkanten vorgesehen sein. Hierbei wird zum günstigen Kaltzuschnitt nach der Warmumformung und Presshärtung, beispielsweise durch einfache Schneide- bzw. Trennverfahren, eine für das Schneide- bzw. Trennwerkzeug schonende Ausgangssituation des Werkstoffes bereitgestellt. Im Zuge von hohen Toleranzanforderungen kann die weitere Bearbeitung des Bauteils, beispielsweise durch Zuschnitt hier besonders schonend, präzise und kostengünstig hergestellt werden. Insbesondere kann auf ein teures Laserbeschneiden des sonst harten Bauteilrandes verzichtet werden. Dazu kann besonders vorteilhaft ein umlaufender, schmaler und endkontur naher Bereich zweiter Art ausgebildet werden. Gleichzeitig werden die Risiken einer verzögerten Rissbildung hervorgerufen durch lokale Spannungen im harten Gefüge deutlich verringert.

Im Rahmen der Erfindung besitzt der Bereich erster Art ein Dehnvermögen A50 zwischen 10 und 30 %, vorzugsweise zwischen 12% und 20%, insbesondere zwischen 12 und 16 %, besonders bevorzugt zwischen 14% und 16%. Hierdurch ist eine hinreichend hohe Festigkeit, bei gleichzeitig ausreichender Duktilität sichergestellt, sodass im Crashfall eine Rissbildung und somit ein Abreißen einzelner Kraftfahrzeugstrukturbauteile vermieden ist.

Besonders bevorzugt weist weiterhin der Bereich erster Art eine Zugfestigkeit zwischen 500 und 1000 N/mm² auf, vorzugsweise zwischen 550 und 800 N/mm². Der Bereich erster Art weist eine Streckgrenze zwischen 200 und 800 N/mm², bevorzugt zwischen 250 und 600 N/mm², besonders bevorzugt zwischen 250 und 500 N/mm², ganz besonders bevorzugt zwischen 300 und 500 N/mm².

Zwischen dem Bereich zweiter Art und dem Bereich erster Art ist die Zugfestigkeit mit einem Gradienten von mehr als 200 N/mm² und insbesondere mehr als 400 N/mm² pro 10 mm abnehmend oder zunehmend ausgebildet. Dies bedeutet, dass die Streckgrenze und/oder Zugfestigkeit vom Bereich erster Art pro 10 mm mehr als 200 N/mm², in Richtung des Bereichs zweiter Art zunimmt.

Vorzugsweise weist der Bereich zweiter Art eine Festigkeit von mehr als 1000 N/mm², insbesondere mehr als 1200 N/mm² und besonders bevorzugt mehr als 1400 N/mm² auf.

Das erfindungsgemäße Verfahren zur Herstellung einer warmumgeformten und pressgehärteten Kraftfahrzeugsäule, wobei die Kraftfahrzeugsäule mindestens zwei Bereiche unterschiedlicher Festigkeit erhält, sieht folgende Verfahrensmerkmale vor:
- Bereitstellen einer härtbaren Blechplatine bzw. Halbzeug, welche auf mindestens Austenitisierungstemperatur erwärmt wird,
- Zwischenkühlen eines Bereiches erster Art der Blechplatine bzw. Halbzeug, wobei die Abkühlgeschwindigkeit größer der unteren kritischen Abkühlgeschwindigkeit der Bainitbildung des Werkstoffes der Blechplatine bzw. Halbzeug gewählt wird,
- Warmformen und Presshärten der Blechplatine bzw. Halbzeug zu der Kraftfahrzeugsäule in einem Presshärtewerkzeug.

Durch das erfindungsgemäße Verfahren wird zeitgesteuert und/oder temperaturgesteuert ein Zwischenstufengefüge eingestellt. Das Zwischenstufengefüge wird insbesondere in dem Bereich erster Art der Blechplatine durch ein Zwischenkühlen eingestellt. Die Abkühlgeschwindigkeit des Zwischenkühlens wird dabei im Rahmen der Erfindung so gewählt, dass sie oberhalb der unteren kritischen Abkühlgeschwindigkeit der Bainitbildung des Werkstoffes der Blechplatine liegt. Sie ist also größer als die untere kritische Abkühlgeschwindigkeit der Bainitbildung. Insbesondere werden Bereiche gekühlt, die nach dem Presshärten weich sein sollen, d.h. sie weisen eine höhere Duktilität auf.

Im Rahmen der Erfindung ist es grundsätzlich auch möglich, das Bauteil kalt zu einem Halbzeug vorzuformen. Somit wird das Bauteil aus einer härtbaren Blechplatine zumindest partiell vorgeformt. Vorzugsweise wird dabei eine Vorformung, die zumindest 80 % der Endform angepasst ist, vorgenommen. An den kalten Vorformvorgang, welcher beispielsweise bei Raumtemperatur durchgeführt wird, schließt sich dann ein Erwärmen auf mindestens Austenitisierungstemperatur, also auf über AC3-Temperatur, an. Anschließend folgt dann zumindest ein partielles Zwischenkühlen eines Bereiches erster Art sowie weitere Schritte des erfindungsgemäßen Verfahrens.

Der Abkühlvorgang des Zwischenkühlens wird dabei nach dem Erwärmen der härtbaren Blechplatine auf Austenitisierungstemperatur durchgeführt, er kann jedoch im Rahmen der Erfindung vor oder während des Warmform- und Presshärteprozesses durchgeführt werden. Insbesondere wenn der Abkühlvorgang des Zwischenkühlens während des Presshärtens durchgeführt wird, sind hier in dem Pressenwerkzeug entsprechende Mittel vorzusehen, die eine entsprechende Abkühlung und auch entsprechende Abkühlgeschwindigkeiten realisieren können.

Sofern die Zwischenkühlung vor dem Warmform- und Presshärten stattfindet, so ist eine Produktionslinie mit entsprechenden Zwischentransfers der über Austenitisierungstemperatur erwärmten Blechplatine hierunter zu verstehen.

Die Abkühlung selber kann beispielsweise durch freie oder erzwungene Konvektion, Kühlwalzen, zweiseitige oder einseitige Temperierplatten mit Isoliergegenlage oder durch Beaufschlagung mit Kühlmedien wie Wasser oder durch andere entsprechende Abkühlvorrichtungen durchgeführt werden. Hierbei kann eine Abkühlung sowohl in einer fest installierten Zwischenstation als auch in einer im Produktionstakt beweglichen Kühleinheit durchgeführt werden. Vorzugsweise erfolgt hier eine Abkühlgeschwindigkeit bei der Zwischenkühlung zwischen 200 Kelvin pro Sekunde und 5 Kelvin pro Sekunde. Besonders bevorzugt ist eine Abkühlgeschwindigkeit von 50 Kelvin pro Sekunde vorzusehen. Die Abkühlung findet dabei bevorzugt unmittelbar nach der Entnahme aus dem Ofen statt. Hierdurch werden Festigkeitswerte in den ersten Bereichen zwischen 550 und 900 MPa eingestellt. Vorzugsweise werden Festigkeitswerte von im Wesentlichen 700 MPa eingestellt.

Insbesondere wird ein Bereich zweiter Art, wobei der Bereich zweiter Art jedweder Bereich der Blechplatine ist, der nicht durch den Bereich erster Art vereinnahmt wurde, oberhalb der Austenitisierungstemperatur gehalten. Dies bedeutet, dass nach dem Erwärmen der Blechplatine auf mindestens Austenitisierungstemperatur eine entsprechende Temperatur oberhalb der Austenitisierungstemperatur gehalten wird. Dies kann beispielsweise aktiv durch externe Wärmequellen geschehen, oder aber passiv durch entsprechende Isolierung. Denkbar ist aber auch die Aufrechterhaltung über der Temperatur AC1. Dadurch würde ein gewisser Festigkeitsverlust gegenüber dem Umformen aus AC3 erfolgen, der aber in den meisten Fällen unkritisch ist.

Im Falle von externen Wärmequellen kann das Halten der Temperatur in dem Bereich zweiter Art, insbesondere durch Infrarotlampen, Heizwendeln, Porenbrennern, Isolierplatten oder ähnliche externe Wärmequellen erfolgen. Ebenfalls ist es im Rahmen der Erfindung möglich, eine Temperatur deutlich oberhalb der Austenitisierungstemperatur zu wählen, so dass die Zeit, die nach Abschluss der Erwärmung auf über Austenitisierungstemperatur bis zum Beginn des Presshärtevorganges und die hierbei erfolgende Abkühlung derart aufeinander abgestimmt sind, dass bei Beginn des Presshärtevorganges der Bereich zweiter Art immer noch eine Temperatur aufweist, die mindestens oberhalb der Austenitisierungstemperatur liegt.

In einer weiteren vorteilhaften Ausführungsvariante der vorliegenden Erfindung wird die Abkühlgeschwindigkeit beim Zwischenkühlen des Bereiches erster Art so gewählt, dass ein bainitisches Gefüge erhalten wird, vorzugsweise wird auf eine Temperatur zwischen 700 und 400°C abgekühlt, bevorzugt 650 bis 450° C, insbesondere auf 650 bis 500°C und bevorzugt auf 600 bis 400° C und besonders bevorzugt auf 500° C. Bei Abkühlgeschwindigkeiten, die größer der unteren kritischen Abkühlgeschwindigkeit des jeweilig eingesetzten Werkstoffes liegen, jedoch oberhalb der Martensit-Starttemperatur stoppen, erfolgt die sogenannte Bainitbildung bei isothermen Halten der Abkühltemperatur, auch als Zwischengefüge oder aber auch Zwischenstufe bekannt.

Im Gegensatz zu den aus dem Stand der Technik bekannten Verfahren, bei denen Perlit oder Ferrit gebildet wird, wobei sich der Perlit maßgeblich durch Diffusion direkt aus dem Austenit bildet, ist in der Zwischenstufe des Bainits durch die schnellere Abkühlung die Diffusion des Kohlenstoffes im Austenit stark erschwert. Es wandeln sich dabei bei der Bainitbildung meist von Korngrenzen ausgehend, kleine Austenitbereiche in ein verzehrtes alpha-Gitter um. Da die Diffusionsgeschwindigkeit im alpha-Gitter wesentlich größer ist, als im gamma-Gitter, scheiden sich nun in diesen an Kohlenstoff übersättigten alpha-Mischkristallen kleine Zementitkörnchen aus, die feiner sind, je schneller abgekühlt wird. Hierbei entsteht eine im Wesentlichen nadelige Struktur des bainitischen Gefüges. Hierbei entsteht eine körnige Struktur der Karbide in Folge der durch zunehmende Kornfeinheit anwachsenden Härte. Bei dem bainitischen Gefüge wird weiterhin zwischen einer oberen Zwischenstufe, in der die Karbide zur größeren Einwandung vereinigt und einer unteren Zwischenstufe, in der die Karbide feinstverteilt sind, unterschieden.

In einer bevorzugten Ausführungsvariante des vorliegenden Verfahrens, wird der Bereich erster Art auf der Abkühltemperatur der Zwischenkühlung für eine vorgebbare Zeit gehalten, vorzugsweise findet das Halten der Temperatur im Wesentlichen isotherm statt. Durch diese Ausführungsvariante kann das bainitische Zwischengefüge mit den jeweils geforderten bzw. gewünschten Festigkeitswerten zeitabhängig genau eingestellt werden. Die Zwischenkühlung erfolgt bei dieser Ausführungsvariante maßgeblich auf eine Temperatur, in der sich das Werkstoffgefüge des Bereiches erster Art in Austenit umgewandelt hat oder aber erfolgt direkt in das Zwischengefüge hinein. Von dieser Abkühltemperatur aus, erfolgt eine weitere Umwandlung des Werkstoffgefüges durch isothermes Halten für einen bestimmten Zeitraum. Der Werkstoff wandelt sich dann im Falle von einem austenitischem Gefüge in ein bainitisches Gefüge. Wird der Werkstoff durch die Wahl der Abkühlgeschwindigkeit direkt in die Zwischenstufe hinein gekühlt, so ist bereits auch hier ein Mischgefüge zwischen Austenit und Bainit eingestellt. Durch das Halten auf der Abkühltemperatur, erfolgt ein Halten im reinen bainitischen Umwandlungsgefügebereich für eine bestimmte Zeit. Je länger der Bereich erster Art auf dieser Temperatur gehalten wird, umso größer wird der bainitischen Anteil des Gefüges.

In einer weiteren bevorzugten Ausführungsvariante wird der auf die Abkühltemperatur abgekühlte Zwischengefügebereich in dem Presshärtwerkzeug selber aus der bainitischen Gefügeumwandlungsstufe weiter abgeschreckt, so dass im Bereich erster Art ein Mischgefüge aus Martensit und Bainit eingestellt wird. Durch das Abschrecken des Bereiches erster Art, in dem das Gefüge eine Zwischenstufe aufweist, werden die Rest-Austenitanteile beim Presshärten zu Martensitanteilen umgewandelt. Hierdurch entsteht in den Bereichen erster Art ein Martensit-Bainit-Mischgefüge. Die Anteile des Bainits im Verhältnis zum Martensit hängen dabei wiederum von der Dauer ab, die der erste Bereich in der Zwischenstufe gehalten wird, bevor der Presshärtevorgang beginnt.

In einer besonders bevorzugten Ausführungsvariante der vorliegenden Erfindung wird die Abkühlgeschwindigkeit beim Zwischenkühlen oberhalb der oberen kritischen Abkühlgeschwindigkeit des verwendeten Werkstoffes gewählt. Hierdurch kann gezielt ein austenitischer Bereich eingestellt werden, der im Folgenden auf einem Temperaturlevel vorzugsweise isotherm über eine vorgebbare Zeit gehalten wird, so dass die Gefügeumwandlung über die Haltezeit gezielt bainitsch eingestellt wird. Je nach verwendeter Haltezeit kann hierbei dann ein teilweise bainitisches austenitisches Gefüge oder aber ein ausschließlich bainitisches Gefüge eingestellt werden. Im Falle eines bainitisch-austenitischen Gefüges, wird dieses durch den nachfolgenden Presshärtevorgang in ein bainitisch-martensitisches Gefüge umgewandelt.

Im Rahmen der Erfindung ist ein Halten auf im Wesentlichen gleicher Temperatur unterhalb der Ferrit- und Perlittemperatur, also maßgeblich unter 700°C, insbesondere unter 600°C, besonders bevorzugt unter 550° C, jedoch oberhalb einer Martensit-Starttemperatur zu verstehen. So kann es bei einem isothermen Halten über einen längeren Zeitbereich beispielsweise zu einem Abnehmen der Temperatur von 500 auf 400°C kommen, was jedoch im Rahmen der Erfindung immer noch als im Wesentlichen isotherm zu sehen ist. Besonders bevorzugt wird der Bereich erster Art isotherm in einem Zeitbereich von 1 Sekunde bis zu 80 Sekunden gehalten. Besonders bevorzugt sind 15 Sekunden als Haltezeit vorzusehen. Dies ist jedoch der jeweils eingesetzten Werkstofflegierung abhängig zu wählen.

In einer weiteren bevorzugten Ausführungsvariante des erfindungsgemäßen Verfahrens, wird die Zwischenkühlung des Bereiches erster Art in dem Presshärtewerkzeug durchgeführt, vorzugsweise durch in dem Presshärtewerkzeug angeordnete Kühlplatten. Hierdurch verringern sich die Taktzeiten und auch die Herstellungskosten. Insbesondere wird ein Kraftfahrzeugbauteil mit Bereich unterschiedlicher Festigkeit in nur zwei Werkzeugschritten hergestellt. Zunächst erfolgt ein Erwärmen in einer Ofenanlage und anschließend ein kombiniertes Zwischenkühlen und Warmumformen und Presshärten in nur einem Werkzeug.

Für die Abkühlgeschwindigkeit beim eigentlichen Presshärtevorgang wird mindestens eine Abkühlgeschwindigkeit von 25 Kelvin pro Sekunde gewählt. Besonders bevorzugt mehr als 27 Kelvin pro Sekunde. Insbesondere werden jedoch höhere Abkühlgeschwindigkeiten für den eigentlichen Presshärtevorgang gewählt. Maßgeblich erfolgt der Presshärtevorgang dann insbesondere in sowohl dem Bereich erster Art als auch in dem Bereich zweiter Art mit der gleichen Abkühlgeschwindigkeit abhängig vom lokalen Temperaturgradienten zwischen Presshärtewerkzeug und Werkstück. Aufgrund der verschiedenen Temperaturen bei Beginn des Presshärtevorganges in beiden Bereichen kann jedoch die Abkühlgeschwindigkeit von Bereich erster Art zu Bereich zweiter Art leicht divergieren.

Besonders bevorzugt wird härtbarer Stahl bei dem erfindungsgemäßen Verfahren verwendet, der als mikrolegierter Vergütungsstahl einzustufen ist. Dieser weist insbesondere folgende Legierungselemente als Massengewichtsprozentanteile auf:

| | | |
|---|---|---|
| Kohlenstoff | (C) | 0,19 bis 0,25 |
| Silizium | (Si) | 0,15 bis 0,30 |
| Mangan | (Mn) | 1,10 bis 1,40 |
| Phosphor | (P) | 0 bis 0,025 |
| Schwefel | (S) | 0 bis 0,015 |
| Chrom | (Cr) | 0 bis 0,35 |
| Molybdän | (Mo) | 0 bis 0,35 |
| Titan | (Ti) | 0,020 bis 0,050 |
| Bor | (B) | 0,002 bis 0,005 |
| Aluminium | (Al) | 0,02 bis 0,06. |

Besonders bevorzugt wird im Rahmen der Erfindung das Zwischenkühlen der Bereiche erster Art mit einem Werkzeug mit integrierten Kühlplatten durchgeführt. Die Kühlplatten haben dabei eine Eigentemperatur von bis zu 600° Celsius, die jedoch gegenüber der AC3-Temperatur von mehr als 900° Celsius kälter ist. Mittels dieser Kühlplatten kann der Bereich erster Art abgekühlt werden und dann gegebenenfalls auch isotherm über einen Zeitraum gehalten werden. Beispielsweise können solche Kühlplatten aufgrund von elektrischen Heizpatronen oder aber über eine rückseitige Brennererwärmung oder aber über Thermoöle auf die jeweils erforderliche Temperatur gebracht werden.

In einer weiteren Ausführungsvariante kann die Zwischenkühlung auch über im Wesentlichen kalte Kühlplatten erfolgen. Die Platten weisen dann eine Temperatur deutlich unterhalb von 400° C vorzugsweise zwischen -100 °C und +100 °C, besonders bevorzugt zwischen -10 °C und +25 °C auf. Eine isotherme Haltezeit ist jedoch mit kalten Kühlplatten nur bedingt durchführbar. Besonders bevorzugt werden beide Versionen von Kühlplatten, beispielsweise auch in ein Warmumformwerkzeug und Pressenwerkzeug integriert, sodass der gesamte Prozess nach der eigentlichen Ofenerwärmung in nur einem Werkzeug durchgeführt wird. Im Rahmen der Erfindung können die Kühlplatten zur Durchführung der Zwischenkühlung jedoch auch in einem extra Werkzeug untergebracht werden, sodass der Prozess von Erwärmungsofen über Zwischenkühlung zum eigentlichen Warmumform- und Presshärtwerkzeug stattfindet. Diese Ausführungsvariante hat den Vorteil, dass das separate Werkzeug im Wesentlichen als flaches Werkzeug mit im Wesentlichen ebenen Heiz- bzw. Kühlplatten gestaltet werden kann.

Weitere Vorteile, Merkmale, Eigenschaften und Aspekte der vorliegenden Erfindung ergeben sich aus der nachfolgenden schematischen Figurenbeschreibung. Diese dient dem einfachen Verständnis der Erfindung. Es zeigen:
- Figur 1: zeigt einen Flächenausschnitt einer erfindungsgemäßen Kraftfahrzeugsäule mit einem Bereich erster Art, einem Übergangsbereich und einem Bereich zweiter Art;
- Figur 2: zeigt eine erfindungsgemäße Kraftfahrzeugsäule und
- Figur 3: zeigt ein ZTU-Schaubild zur Durchführung eines erfindungsgemäßen Verfahrens.

In den Figuren werden für gleiche oder ähnliche Bauteile dieselben Bezugszeichen verwendet, auch wenn eine wiederholte Beschreibung aus Vereinfachungsgründen entfällt.

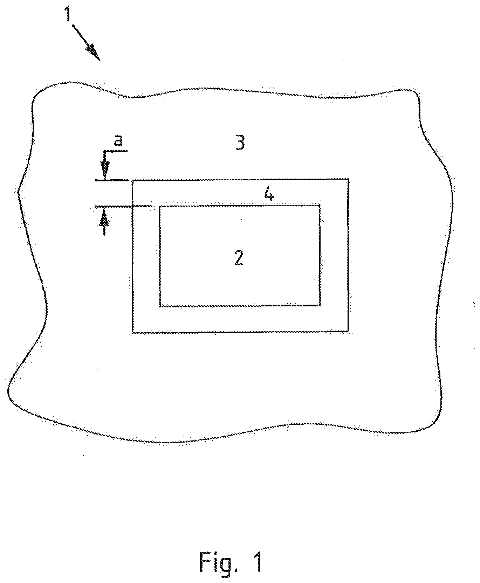

Figur 1 zeigt einen Ausschnitt einer Kraftfahrzeugsäule 1. Hierbei ist umliegend zu erkennen, dass in einem Bereich erster Art 2 ein Bereich zweiter Art 3 gemäß der vorliegenden Erfindung ausgebildet ist. Zwischen dem Bereich erster Art 2 und Bereich zweiter Art 3 ist ein Übergangsbereich 4 angeordnet. In dem Bereich erster Art 2 ist ein tendenziell duktiles Werkstoffgefüge hergestellt, in dem Bereich zweiter Art 3 ein hartes Werkstoffgefüge. Im Rahmen der vorliegenden Erfindung weist der Übergangsbereich 4 im Wesentlichen einen Breite a auf, die in Relation zu dem Bereich erster Art 2 besonders klein ausfällt.

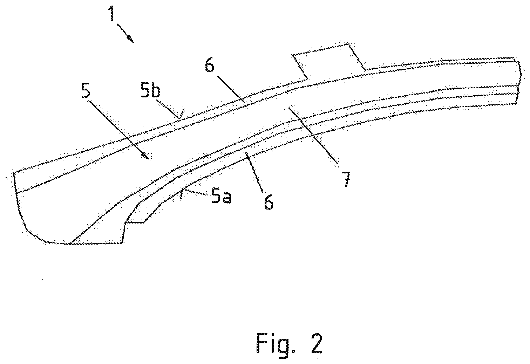

Figur 2 zeigt eine Kraftfahrzeugsäule 1 in Form einer A-Säule 5 einer hier nicht näher dargestellten Kraftfahrzeugkarosserie. Die A-Säule 5 weist an ihren jeweiligen Seiten 5a, 5b Fügeflansche 6 auf, die eine höhere Duktilität besitzen gegenüber einem mittleren Profilteil 7. Die A-Säule 5 hat demnach durch ihren mittleren Profilteil 7 eine hohe Festigkeit und Härte, die im Crashfall den Schutz eines Fahrgastraumes garantiert und in ihren Fügeflanschen 6 gegenüber dem mittleren Profilteil eine eher duktile Werkstoffeigenschaft, so dass an den Fügeflanschen 6 angebundene Komponenten, die hier nicht näher dargestellt sind, mit der A-Säule 5 verbunden bleiben und kein Abreißen in den Verbindungsstellen, gekennzeichnet durch die Fügeflansche 6, geschieht.

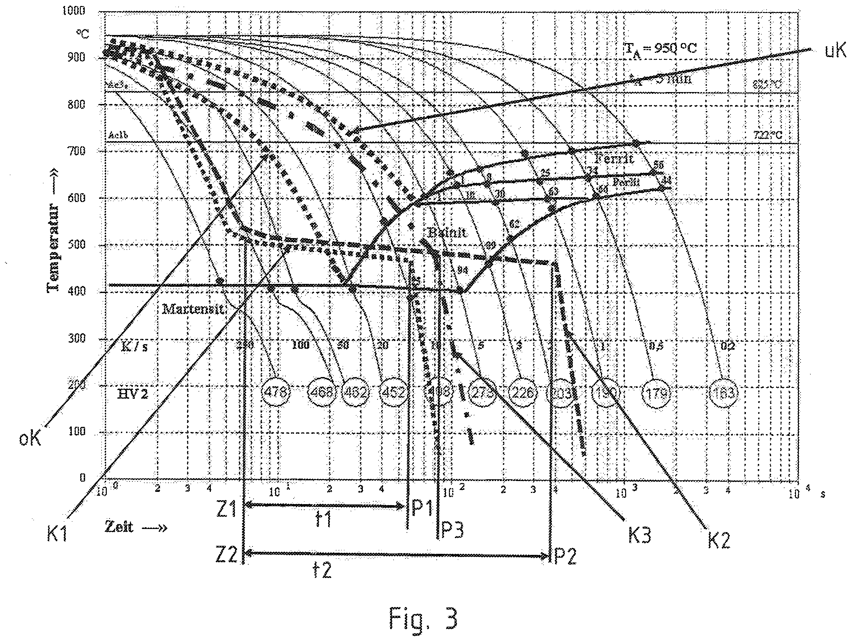

In der Figur 3 ist ein ZTU-Schaubild eines exemplarischen Stahls dargestellt, der den Bereich der vorliegenden Erfindung nicht beschränkt. Es sind die verschiedenen Gefügestrukturen eingezeichnet, die sich bei Abkühlgeschwindigkeiten über die Temperatur bei dem Werkstoff einstellen. Im unteren Bildbereich ist die Martensitbildung gezeigt. Darüber, im mittleren Bildbereich, die Bainitbildung und wiederum darüber die Perlit- bzw. Ferritbildung.

In dem hier gezeigten Ausführungsbeispiel sind drei verschiedene Kurven für verschiedene Abkühlprozesse gezeigt. Kurve K1 zeigt den Temperaturverlauf für einen erfindungsgemäßen ersten Bereich, wobei dieser zunächst auf eine Temperatur über AC3-Temperatur erhitzt ist. Von dieser Temperatur wird auf eine Zwischentemperatur auf ca. 520°C abgekühlt mit einer Abkühlgeschwindigkeit, die in diesem Falle größer ist, als die obere kritische Abkühlgeschwindigkeit oK für die Bainitbildung des hier gezeigten Werkstoffes. Bei Erreichen der Abkühlungstemperatur der Zwischenkühlung von ca. 520°C wird der erste Bereich auf einer Temperatur für den Zeitraum t1 im Wesentlichen isotherm gehalten. Die Temperatur fällt dabei aufgrund von Wärmeabgang in Form von beispielsweise Wärmestrahlung, Konvektion oder aber auch Wärmeleitung von ca. 520°C auf ca. 480°C. Es stellt sich somit beim Zeitpunkt Z1 der Zwischenkühlung ein austenitisches Gefüge ein und zum Zeitpunkt P1, der Beginn des Presshärtens in der ersten Ausführungsvariante, ein bainitisch-austenitisches Mischgefüge.

Im weiteren Verlauf wird bei der ersten Ausführungsvariante vom Zeitpunkt P1 aus derart durch den Presshärtevorgang abgeschreckt, dass das bainitisch-austenitische Mischgefüge im ersten Bereich in ein bainitisch-martensitisches Mischgefüge umgewandelt wird. Parallel hierzu wird der erfindungsgemäß zweite Bereich von einer Temperatur oberhalb von AC3 durch Presshärten abgeschreckt, sodass hier direkt aus einem austenitischen Gefüge ein martensitisches Gefüge entsteht, was hier der Übersichtlichkeit halber jedoch nicht näher dargestellt ist.

Eine zweite Ausführungsvariante, die jedoch nicht unter den Schutzbereich fällt, ist mit dem Abkühlverlauf gemäß Kurve 2 des ersten Bereiches dargestellt. Der Abkühlverlauf der Kurve 2 folgt analog dem Abkühlverlauf der Kurve K1, wobei von einem Zeitpunkt Z2 (gleich Z1) die Abkühltemperatur länger gehalten wird, sodass der Presshärtevorgang zu einem Zeitpunkt P2 beginnt. Folglich ist die Zeitspanne t2 größer als t1. Das Gefüge im ersten Bereich hat sich zur Zeitpunkt P2 vollständig in Bainit umgewandelt und erfährt somit durch die Abkühlgeschwindigkeit nach dem Zeitpunkt P2 keine weitere Gefügeumwandlung mehr.

In einer dritten Ausführungsvariante gemäß der vorliegenden Erfindung, wird eine Abkühlgeschwindigkeit von einer Temperatur oberhalb der AC3-Temperatur gemäß Kurve 3 gewählt, sodass direkt in das bainitische Zwischengefüge beim Abkühlvorgang der Zwischenkühlung umgewandelt wird. Hierbei wurde in dem ersten Bereich ein austenitisches-bainitisches Zwischengefüge eingestellt, so dass bei Einsetzen des Presshärtevorganges zum Zeitpunkt P3 dieses bainitisch-austenitische Mischgefüge in ein bainitisch-martensitisches Mischgefüge im ersten Bereich umgewandelt wird. Bei den Ausführungsvarianten gemäß Kurve 2 und 3 wird jeweils der zweite Bereich, der während der Zwischenkühlung oberhalb der AC3-Temperatur gehalten ist, durch eine Abkühlung während des Presshärtevorganges vom austenitischen Bereich direkt in Martensit umgewandelt. Bei der Ausführungsvariante gemäß Kurve 3 wird die Temperatur erfindungsgemäß immer größer der unteren kritischen Abkühlgeschwindigkeit uK des jeweilig eingesetzten Werkstoffes gewählt.

### Bezugszeichen:

- 1 -: Kraftfahrzeugsäule
- 2 -: Bereich erster Art
- 3 -: Bereich zweiter Art
- 4 -: Übergangsbereich
- 5 -: A-Säule
- 5a -: Seiten
- 5b -: Seiten
- 6 -: Fügeflansch
- 7 -: Profilteil

- a -: Breite

- P1 -: Zeitpunkt Start Presshärten
- P2 -: Zeitpunkt Start Presshärten
- P3 -: Zeitpunkt Start Presshärten
- oK -: obere kritische Abkühlgeschwindigkeit
- uK -: untere kritische Abkühlgeschwindigkeit
- t1 -: Haltezeit auf Zwischenkühltemperatur
- t2 -: Haltezeit auf Zwischenkühltemperatur
- Z1 -: Zeitpunkt Zwischenkühlung
- Z2 -: Zeitpunkt Zwischenkühlung
- Z3 -: Zeitpunkt Zwischenkühlung
- K1 -: Kurve 1
- K2 -: Kurve 2
- K3 -: Kurve 3

## Patentansprüche

1. Kraftfahrzeugsäule (1), hergestellt durch Warmumformen und Presshärten, wobei die Kraftfahrzeugsäule nach dem Presshärten mindestens zwei Bereiche unterschiedlicher Festigkeit aufweist und ein Bereich erster Art (2) Bainit als Hauptgefügebestandteil aufweist und dieser ein Dehnvermögen A50 zwischen 10% und 30% hat und ein Bereich zweiter Art (3) Martensit als Hauptgefügebestandteil aufweist und ein Übergangsbereich (4) zwischen dem Bereich erster Art (2) und dem Bereich zweiter Art (3) kleiner als 50mm ist, **dadurch gekennzeichnet, dass** der Bereich erster Art (2) als Flansch, Fügeflansch und/oder Außenkante der Kraftfahrzeugsäule (1) ausgebildet ist und in dem Bereich zweiter Art (3) Bainit als weiterer Gefügebestandteil vorhanden ist und dass die Zugfestigkeit im Übergangsbereich (4) mit einem Gradienten von mehr als 200 N/mm² pro 10 mm abnimmt oder zunimmt.

2. Kraftfahrzeugsäule nach Anspruch 1 , **dadurch gekennzeichnet, dass** in dem Bereich zweiter Art (3), weitere Gefügebestandteile mit weniger als 15% vorhanden sind.

3. Kraftfahrzeugsäule nach einem der Ansprüche 1 oder 2, **dadurch gekennzeichnet, dass** in dem Bereich erster Art (2) weitere Gefügebestandteile mit weniger als 30% vorhanden sind.

4. Kraftfahrzeugsäule nach einem der Ansprüche 1 bis 3, **dadurch gekennzeichnet, dass** der Bereich erster Art (2) von dem Bereich zweiter Art (3) zumindest teilweise umschlossen ist.

5. Kraftfahrzeugsäule nach einem der Ansprüche 1 bis 4, **dadurch gekennzeichnet, dass** der Bereich erster Art (2) punktuell ausgebildet ist.

6. Kraftfahrzeugsäule nach einem der Ansprüche 1 bis 5, **dadurch gekennzeichnet, dass** der Bereich erster Art (2) in Bereichen der Kraftfahrzeugsäule (1) ausgebildet ist, die im Crashfall besonders starken Deformationen unterworfen sind und/oder durch Deformationen Crashenergie abbauen sollen.

7. Kraftfahrzeugsäule nach einem der Ansprüche 1 bis 6, **dadurch gekennzeichnet, dass** der Bereich erster Art (2) eine erhöhte Wanddicke gegenüber dem Bereich zweiter Art (3) aufweist.

8. Kraftfahrzeugsäule nach einem der Ansprüche 1 bis 7, **dadurch gekennzeichnet, dass** im Bereich erster Art (2) ein Durchzug herstellbar ist und/oder Abkantungen nach dem Warmformen herstellbar sind.

9. Kraftfahrzeugsäule nach einem der Ansprüche 1 bis 8, **dadurch gekennzeichnet, dass** der Bereich erster Art (2) ein Dehnvermögen A50 zwischen 12% und 20% hat.

10. Kraftfahrzeugsäule nach einem der Ansprüche 1 bis 9, **dadurch gekennzeichnet, dass** der Bereich erster Art (2) eine Zugfestigkeit zwischen 500 und 1000 N/mm² aufweist.

11. Kraftfahrzeugsäule nach einem der Ansprüche 1 bis 10, **dadurch gekennzeichnet, dass** der Bereich zweiter Art (3) eine Festigkeit von mehr als 1400 N/mm² aufweist.

12. Kraftfahrzeugsäule nach einem der Ansprüche 1 bis 11, **dadurch gekennzeichnet, dass** der Bereich erster Art (2) eine Streckgrenze zwischen 200 und 800 N/mm² aufweist.

13. Kraftfahrzeugsäule nach einem der Ansprüche 1 bis 12, **dadurch gekennzeichnet, dass** zu deren Herstellung ein Tailor Welded Blank oder ein Tailor Rolled Blank verwendet wird.

14. Verfahren zur Herstellung einer warmumgeformten und pressgehärteten Kraftfahrzeugsäule (1) gemäß den Merkmalen von Patentanspruch 1, wobei die Kraftfahrzeugsäule (1) mindestens zwei Bereiche (2, 3) unterschiedlicher Härte erhält, **gekennzeichnet durch** folgende Verfahrensmerkmale:
- Bereitstellen einer härtbaren Blechplatine bzw. Halbzeug, welche auf mindestens Austenitisierungstemperatur erwärmt wird,
- Zwischenkühlen eines Bereichs erster Art der Blechplatine bzw. Halbzeug, wobei die Abkühlgeschwindigkeit größer der unteren kritischen Abkühlgeschwindigkeit (uK) des Werkstoffes der Blechplatine bzw. des Halbzeugs gewählt wird,
- Warmformen und Presshärten der Blechplatine bzw. des Halbzeuges zu der Kraftfahrzeugsäule (1) in einem Presshärtewerkzeug.

15. Verfahren nach Anspruch 14, **dadurch gekennzeichnet, dass** ein Bereich zweiter Art (3) bis zur Zuführung in das Pressenwerkzeug oberhalb der Austenitisierungstemperatur gehalten wird.

16. Verfahren nach Anspruch 14 oder 15, **dadurch gekennzeichnet, dass** die Abkühlgeschwindigkeit beim Zwischenkühlen des Bereiches erster Art (2) so gewählt wird, dass ein bainitisches Gefüge erhalten wird und auf eine Temperatur zwischen 600 und 400°C abgekühlt wird.

17. Verfahren nach einem der Ansprüche 14 bis 16, **dadurch gekennzeichnet, dass** der Bereich erster Art (2) auf der Abkühltemperatur der Zwischenkühlung für eine vorgebbare Zeit gehalten wird.

18. Verfahren nach einem der Ansprüche 14 bis 17, **dadurch gekennzeichnet, dass** der Bereich erster Art (2) in dem Presshärtewerkzeug aus der bainitischen Gefügeumwandlungsstufe abgeschreckt wird, so dass ein Mischgefüge aus Martensit, Bainit und Ferrit und/oder Perlit eingestellt wird.

19. Verfahren nach einem der Ansprüche 14 bis 18, **dadurch gekennzeichnet, dass** die Abkühlgeschwindigkeit der Zwischenkühlung größer der oberen kritischen Abkühlgeschwindigkeit (oK) gewählt wird.

20. Verfahren nach einem der Ansprüche 14 bis 19, **dadurch gekennzeichnet, dass** die Zwischenkühlung des Bereiches erster Art (2) in dem Presshärtewerkzeug durchgeführt wird.

21. Verfahren nach einem der Ansprüche 14 bis 20, **dadurch gekennzeichnet, dass** die Blechplatine kalt zu einem Halbzeug vorgeformt wird und anschließend auf mindestens Austenitisierungstemperatur erwärmt wird.

## Claims

1. Automobile column (1) produced by hot-forming and press-hardening, wherein the automobile column has at least two regions of different strength after press-hardening and a region of a first type (2) has bainite as the primary structure component and this has a stretchability A50 of between 10% and 30% and a region of a second type (3) has martensite as the primary structure component, and a transition region (4) between the region of a first type (2) and the region of a second type (3) is smaller than 50 mm, **characterised in that** the region of a first type (2) is constructed as a flange, a connecting flange and/or an outside edge of the automobile column (1) and in the region of a second type (3) bainite is present as an additional structure component and that the tensile strength in the transition region (4) decreases or increases with a gradient of more than 200 N/mm² per 10 mm.

2. Automobile column according to claim 1, **characterised in that** the region of a second type (3) comprises additional structure components in a concentration of less than 15%.

3. Automobile column according to any one of claims 1 or 2, **characterised in that** the region of a first type (2) comprises additional structure components in a concentration of less than 30%.

4. Automobile column according to any one of claims 1 to 3, **characterised in that** the region of a first type (2) is at least partially enclosed by the region of a second type (3).

5. Automobile column according to any one of claims 1 to 4, **characterised in that** the region of a first type (2) is spot-shaped.

6. Automobile column according to any one of claims 1 to 5, **characterised in that** the region of a first type (2) is formed in regions of the automobile column (1) which are subject to particularly strong deformations in a crash and/or which are configured to dissipate crash energy through deformations.

7. Automobile column according to any one of claims 1 to 6, **characterised in that** the region of a first type (2) has an increased wall thickness in relation to the region of a second type (3).

8. Automobile column according to any one of claims 1 to 7, **characterised in that** a passage and/or edges can be produced in the region of a first type (2) after hot-forming.

9. Automobile column according to any one of claims 1 to 8, **characterised in that** the region of a first type (2) has a stretchability A50 between 12% and 20%.

10. Automobile column according to any one of claims 1 to 9, **characterised in that** the region of a first type (2) has a tensile strength between 500 and 1000 N/mm².

11. Automobile column according to any one of claims 1 to 10, **characterised in that** the region of a second type (3) has a strength of more than 1400 N/mm².

12. Automobile column according to any one of claims 1 to 11, **characterised in that** the region of a first type (2) has a yield strength between 200 and 800 N/mm².

13. Automobile column according to any one of claims 1 to 12, **characterised in that** the automobile column is manufactured from a tailor welded blank or tailor rolled blank.

14. Method for producing a hot-formed and press-hardened automobile column (1) according to the features of claim 1, wherein the automobile column (1) has at least two regions (2, 3) of different hardness, **characterised by** the following method features:
- providing a hardenable metal plate or semi-finished product, which is heated to at least an austenising temperature,
- intermediately cooling a region of a first type of the metal plate or semi-finished product, wherein the cooldown speed is selected to be greater than the lower critical cooldown speed (uK) of the material of the metal plate or semi-finished product,
- hot-forming and press-hardening the metal plate or semi-finished product in a press-hardening tool to form the automobile column (1).

15. Method according to claim 14, **characterised in that** a region of a second type (3) is held above the austenising temperature until said region is transported into the press-hardening tool.

16. Method according claim 14 or 15, **characterised in that** the cooldown speed during intermediate cooling of the region of a first type (2) is selected such that a bainitic structure is obtained and cooled to a temperature between 600 and 400°C.

17. Method according to any one of claims 14 to 16, **characterised in that** the region of a first type (2) is held at the intermediate cooling temperature for a predetermined time.

18. Method according to any one of claims 14 to 17, **characterised in that** the region of a first type (2) is quenched in the press-hardening tool from the bainitic structure transformation stage whereby a mixed structure of martensite, bainite and ferrite and/or perlite is adjusted.

19. Method according to any one of claims 14 to 18, **characterised in that** the cooldown speed of the intermediate cooling is selected to be greater than the upper critical cooldown speed (oK).

20. Method according to any one of claims 14 to 19, **characterised in that** the intermediate cooling of the region of a first type (2) is performed in the press-hardening tool.

21. Method according to any one of claims 14 to 20, **characterised in that** the metal plate is pre-formed into a semi-finished product while cold before being heated to at least the austenising temperature.

## Revendications

1. Colonne de véhicule automobile (1), fabriquée par façonnage à chaud et trempage à la presse, dans lequel la colonne de véhicule automobile présente après la trempe à la presse au moins deux zones de résistance différente et une zone d'un premier type (2) présente de la bainite comme composant structurel principal et celle-ci a un pouvoir d'allongement A50 entre 10% et 30%, et une zone d'un second type (3) présente de la martensite comme composant structurel principal et une zone de transition (4) entre la zone du premier type (2) et la zone du second type (3) est plus petite que 50 mm, **caractérisée en ce que** la zone du premier type (2) se présente sous la forme d'une bride, d'un flasque d'assemblage et/ou d'une arête externe de la colonne de véhicule automobile (1) et dans la zone du second type (3), de la bainite est présente comme autre composant structurel et la résistance à la traction dans la zone de transition (4) diminue ou augmente avec un gradient de plus de 200 N/m² par 10 mm.

2. Colonne de véhicule automobile selon la revendication 1, **caractérisée en ce que** d'autres composants structurels sont présents à moins de 15 % dans la zone du deuxième type (3).

3. Colonne de véhicule automobile selon l'une quelconque des revendications 1 ou 2, **caractérisée en ce que** d'autres composants structurels sont présents à moins de 30 % dans la zone du premier type (2).

4. Colonne de véhicule automobile selon l'une quelconque des revendications 1 à 3, **caractérisée en ce que** la zone du premier type (2) est au moins en partie entourée par la zone du deuxième type (3).

5. Colonne de véhicule automobile selon l'une quelconque des revendications 1 à 4, **caractérisée en ce que** la zone du premier type (2) se présente sous une forme ponctuelle.

6. Colonne de véhicule automobile selon l'une quelconque des revendications 1 à 5, **caractérisée en ce que** la zone du premier type (2) est formée dans les zones de la colonne de véhicule automobile (1) qui sont soumises en cas de collision à des déformations particulièrement fortes et/ou doivent compenser l'énergie de la collision par des déformations.

7. Colonne de véhicule automobile selon l'une quelconque des revendications 1 à 6, **caractérisée en ce que** la zone du premier type (2) présente une épaisseur de paroi plus grande par rapport à la zone du deuxième type (3).

8. Colonne de véhicule automobile selon l'une quelconque des revendications 1 à 7, **caractérisée en ce qu'**une traverse peut être fabriquée dans la zone du premier type (2) et/ou des chanfreins peuvent être fabriqués après le façonnage à chaud.

9. Colonne de véhicule automobile selon l'une quelconque des revendications 1 à 8, **caractérisée en ce que** la zone du premier type (2) a un pouvoir d'allongement A50 entre 12 % et 20 %.

10. Colonne de véhicule automobile selon l'une quelconque des revendications 1 à 9, **caractérisée en ce que** la zone du premier type (2) présente une résistance à la traction entre 500 et 1000 N/mm².

11. Colonne de véhicule automobile selon l'une quelconque des revendications 1 à 10, **caractérisée en ce que** la zone du deuxième type (3) présente une résistance de plus de 1 400 N/mm².

12. Colonne de véhicule automobile selon l'une quelconque des revendications 1 à 11, **caractérisée en ce que** la zone du premier type (2) présente une limite élastique entre 200 et 800 N/mm².

13. Colonne de véhicule automobile selon l'une quelconque des revendications 1 à 12, **caractérisée en ce que** l'on utilise pour sa fabrication une ébauche soudée sur mesure ou une ébauche laminée sur mesure.

14. Procédé de fabrication d'une colonne de véhicule automobile (1) façonnée à chaud et trempée à la presse selon les caractéristiques de la revendication 1, dans lequel la colonne de véhicule automobile (1) maintient au moins deux zones (2, 3) de différentes duretés, **caractérisé par** les caractéristiques de procédé suivantes :
- préparation d'une platine pour tôle ou d'un demi-produit durcissable, qui est chauffé(e) à au moins une température d'austénisation,
- refroidissement intermédiaire d'une zone du premier type de la platine pour tôle ou du demi-produit, dans lequel la vitesse de refroidissement est choisie supérieure à la vitesse de refroidissement critique inférieure (uK) du matériau de la platine pour tôle ou du demi-produit,
- façonnage à chaud et trempe à la presse de la platine pour tôle ou du demi-produit pour obtenir la colonne de véhicule automobile (1) dans un outil de trempe à la presse.

15. Procédé selon la revendication 14, **caractérisé en ce qu'**une zone du deuxième type (3) est maintenue au-dessus de la température d'austénisation jusqu'à son acheminement dans l'outil de presse.

16. Procédé selon la revendication 14 ou 15, **caractérisé en ce que** la vitesse de refroidissement lors du refroidissement intermédiaire de la zone du premier type (2) est choisie de sorte qu'une structure bainitique soit maintenue et soit refroidie à une température entre 600 et 400 °C.

17. Procédé selon l'une quelconque des revendications 14 à 16, **caractérisé en ce que** la zone du premier type (2) est maintenue à la température de refroidissement du refroidissement intermédiaire pendant une période prédéterminable.

18. Procédé selon l'une quelconque des revendications 14 à 17, **caractérisé en ce que** la zone du premier type (2) est trempée dans l'outil de trempe à la presse à partir de l'étape de transformation de structure bainitique de sorte que soit obtenue une structure mixte de martensite, de bainite et de ferrite et/ou de perlite.

19. Procédé selon l'une quelconque des revendications 14 à 18, **caractérisé en ce que** la vitesse de refroidissement du refroidissement intermédiaire est choisie plus grande que la vitesse de refroidissement critique supérieure (oK).

20. Procédé selon l'une quelconque des revendications 14 à 19, **caractérisé en ce que** le refroidissement intermédiaire de la zone du premier type (2) est effectué dans l'outil de trempe à la presse.

21. Procédé selon l'une quelconque des revendications 14 à 20, **caractérisé en ce que** la platine pour tôle est pré-façonnée à froid pour obtenir un demi-produit et est ensuite chauffée à au moins la température d'austénisation.
